# EUROPEAN PATENT APPLICATION

(11) **EP 2 407 225 A1**
(43) Date of publication of application: **18.01.2012**
(21) Application number: 11172915.8
(22) Date of filing: 06.07.2011
(51) Int. Cl.: B01D 29/11, B01D 29/58, B01D 29/66, B01D 35/02, B01D 35/06, B03C 1/28

(54) **Fluid filter**

(30) Priority: 14.07.2010 GB 1011803
(71) Applicant: Nagi, Balvinder Singh, Loudwater Hertfordshire WD3 4JX (GB)
(72) Inventor: Nagi, Balvinder Singh, Loudwater Hertfordshire WD3 4JX (GB)
(74) Representative: Fitchett, Stuart Paul

(57) **Abstract**

The present invention provides a filter 1, particularly suitable for use as an inline filter in a central heating system. The filter 1 comprises a housing 2 having fluid inlet 3, a fluid outlet 4, a filter element 6a positioned in a fluid flow path between the fluid inlet and the fluid outlet; and a magnet 8, wherein an inlet chamber 11 is defined in the housing 2 between the inlet 3 and the filter element 6. The magnet 8 is located downstream of the filter element 6a and is moveable between a first position "8" where the magnetic field of the magnet retain s any magnetic particles in the inlet chamber 11 against the filter 6 and a second position 8' where the magnetic field of the magnet 8 does not act to retain a magnetic particles in the inlet chamber 11 against the filter element 6a. This permits the magnet to be moved to the second position 8' to release trapped magnetic particles from the filter element by reverse flushing the filter 1.

## Description

The present invention relates to a fluid filter and in particular, but not exclusively, to an inline filter suitable for use in a central heating system.

In a central heating system it may be advantageous to employ a membrane type filter in the return pipe to a boiler to filter out non-ferrous particles in the system and to also employ a separate magnetic filter to retain any magnetic ferrous particles in the system. For the purposes of this specification, a magnetic particle includes any particle attracted by a magnetic field.

Such filters can together collect debris left in the central heating system on installation and can also collect any iron oxide that might form and otherwise collect as black sludge in, for example, the bottom of pipes, radiators or the boiler.

Some older central heating systems may be routinely flushed on servicing. Such flushing is commonly achieved by breaking into the system by either disconnecting the return pipe or removing the pump motor and impeller and inserting a specially designed pump adaptor. An external pump and a drain are then connected to the system and water, or the flushing agent, is then forced around the system in either the flow direction, or the reverse direction and sometimes both (sequentially).

UK Patent Application, publication number GB 2450501A discloses a device to be fitted in the return pipe, which permits an appropriate flushing unit to be easily connected, thus avoiding the need to interfere with the integrity of the heating system and thus avoid any mess that might otherwise occur. A membrane filter fitted in the system may normally be cleaned by reverse flushing, avoiding the need to dismantle the filter and subsequently clean the filter element or replace it. Similarly magnetic particle filters exist, where the magnet is located outside of the fluid flow, so that the magnet can be removed prior to flushing, without having to interfere with the integrity of the system, releasing the collected particles so that they may be flushed out of the system.

The known arrangements, described above, permit flushing of a system comprising both a magnetic filter and a membrane type filter to be achieved by simply connecting a flushing system to two preinstalled connections, minimising the risk of spillage of the flushing agent, or subsequent leaks which may occur if components of the system had had to be dismantled and reassembled.

A problem with the system described above however is that it may sometimes be difficult to install both a membrane type filter and a separate magnetic filter in a limited length of accessible pipe work, especially where the filters are to be retrofitted to an existing system, in a return pipe to a boiler for example. This is especially problematic as the magnetic filter has to be located so that the magnet can be removed prior to flushing of the system, particularly if the filters have to be located in difficult to access areas, such as in or behind cupboards, where it is difficult and time consuming to install the components. Even where there is unrestricted space, there may often be an objection to the filters being on view.

According to the present invention there is provided a fluid filter comprising: an outer water tight housing having a fluid inlet and a fluid outlet; a filter element positioned in a fluid flow path between the fluid inlet and the fluid outlet; and a magnet, wherein: an inlet chamber is defined in the housing between the inlet and the filter element; the magnet is located downstream of the filter element and is moveable between a first position where the magnetic field of the magnet acts to retain any magnetic particles in the inlet chamber against the filter element and a second position where the magnetic field of the magnet does not act to retain any magnetic particles in the inlet chamber against the filter element.

The present invention provides a filter which includes both a filter element (by which term is meant an element which prevents particles greater than a certain size passing through) and a magnetic filter in a single housing. Furthermore the magnet can be moved within the filter so that it no longer acts to retain magnetic particles on the filter element. This enables the filter to be reverse flushed of both magnetic and non-magnetic particles and also permit the filter to have a particularly compact design.

Preferably the magnet can be moved within the filter by an external magnet, or piece of magnetic material, placed adjacent to the outside of the housings. This enables the internal magnet to be moved within the housing without having to have any mechanical linkage penetrating the housing. Additionally the external magnet, or magnetic material, may be left in place against the housing to retain the internal magnetic in place, which will be desirable where the filter is orientated such that the internal magnet may move horizontally. The external magnet, or magnetic material, will then retain the internal magnet in the desired position.

Preferably, the housing and filter element are both tubular and the filter element is located coaxially within the housing. In such an arrangement fluid flow may pass through the wall of the filter element with the magnet retained inside the filter element. Advantageously the magnet does not extend the full length of the filter element, so that if the flow of fluid to the non-magnetised area of the filter element first passes through the magnetic field of the magnet, magnetic particles will be retained only on the portion of the filter element closest to the magnet, leaving the other part substantially free of magnetic particles.

Preferably, the filter element is a first filter element and the filter further comprises a second filter element in the fluid flow path between the first filter element and the outlet, wherein: an outlet chamber is defined between the second filter element and the outlet; the housing is tubular; the first and second filter elements are axially aligned within the housing so that the magnet may be moved axially along an inner chamber defined by the tubular filter elements from the first position within the first filter element to a second position in the second filter element; and the housing seals with first and second filter elements where they join, the seal separating the inlet chamber from the outlet chamber.

The above arrangement enables the magnet to be slid within the first and second filter elements, permitting the magnetic particles to be reversed flushed away from the first filter element when the magnet is in the second position. Preferably the housing is tubular having an inlet at one end and an outlet at the opposite end and is releasably clamped or screwed together at a portion between the inlet and outlet to permit the filter elements and magnet to be removed. This arrangement permits the filter to be particularly slender in design so that it can be inserted in a straight length of pipe and this can thus be easily fitted to an existing system, although it can be offset by being coupled by appropriate fittings.

Preferably the filter housing is transparent so that it can be seen when it is necessary to clean the filter, or to have the system flushed.

According to a second aspect of the present invention there is provided a central heating system comprising filter as described above, wherein the filter is installed with its major access extending vertically and with the inlet located at the bottom of the filter. This permits the magnet to be retained at the inlet end by gravity.

According to the third aspect of the present invention there is provided a method of flushing a central heating system comprising the above filter, the method comprising: connecting the inlet of the filter to a drain and the outlet of the filter to a flushing supply; moving the magnet to the second position; reverse flushing the filter; and then moving the magnet back to the first position for continued service. This releases the magnetic particles from the filter which can then be reverse flushed from the filter to permit the filter to be cleaned without requiring the filter to be dismantled.

The steps given above may be performed in an order different to that recited and the connections to the inlet and outlet of the filter need not be direct connections, these will normally be via other components of the central heating system.

One embodiment of the present invention will now be described by way of example only, with reference to the accompanying figures, of which:
Figure 1 is a longitudinal section of a filter in accordance with the present invention;
Figure 2 is a transverse section taken along the line of II-II of Figure 1; and
Figure 3 systematically illustrates part of a central heating system incorporating the filter of Figures 1 and 2.

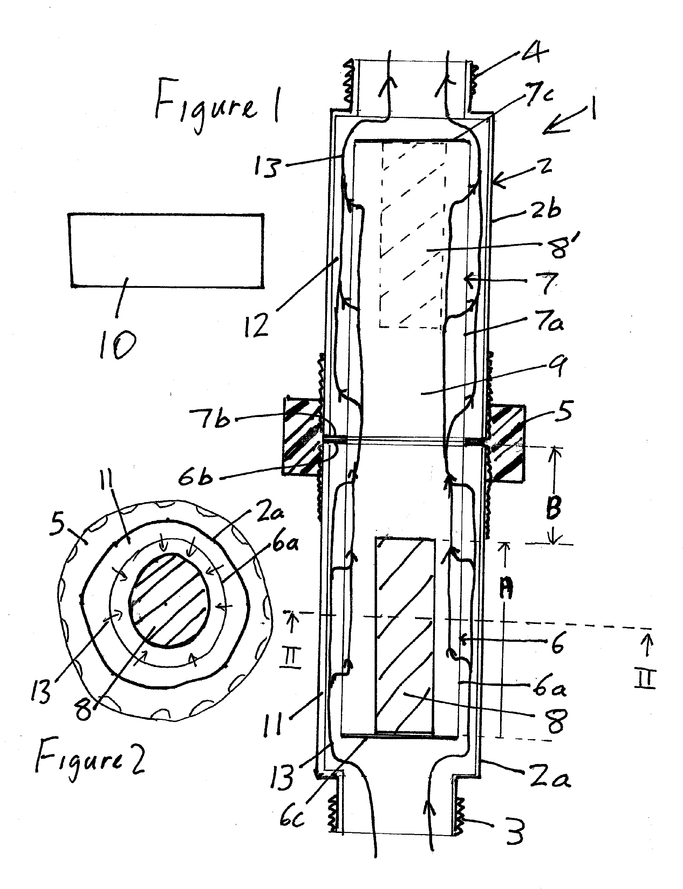

Referring to Figures 1 and 2, the filter in accordance with the present invention is indicated generally as 1 and comprises a transparent housing 2 in the form of a cylinder having an inlet coupling 3 at one end and an outlet coupling 4 at the opposite end. The housing is made up of two almost identical portions, an inlet portion 2a and an outlet portion 2b. The inlet portion 2a and outlet portion 2b are threaded and reversed threaded respectively on their abutting ends and are joined together by a coupling nut 5.

Within the housing 2 there is located a first filter element 6 and second filter element 7. Each filter element 6, 7 respectively comprises a cylindrical mesh 6a, 7a, having a mesh size of typically 70 to 100µm, extending between a flange 6b, 7b located at one end and a disc 6c, 7c located at the other end and forming a closed end of the filter element.

The filter elements 6, 7 may be formed by any one of a number of processes and they could, for example, each be formed from an integrally moulded plastic basket comprising the flange 6b, 7b the disc 6c, 7c and an apertured cylindrical frame work (not shown) joining the flange 6b, 7b and disc 6c, 7c together. Into each "basket" would then be inserted a mesh 6a, 7b formed from a flat sheet and rolled into a cylindrical shape before being inserted into the respective basket.

The flanges 6b and 7b of the respective filter elements 6 and 7 are arranged to abut each other with a magnet 8 first inserted inside a cavity 9 within the filter element 6 and 7. The flanges 6b and 7b are sandwiched between the walls of the inlet portion 2a and outlet portion 2b of the housing and a watertight seal is provided between the inlet portion 2a of the housing, the first filter element flange 6b, the second filter element flange 7b, and the outlet portion 2b of the housing 2. The seal is maintained by the coupling nut 5 compressing the inlet portion 2a and the outlet portion 2b of the housing 2 together.

When in service, the magnetic 8 is to be retained in the cavity 9 towards the inlet coupling 3 of the filter 1, as shown in Figure 2. It may be retained in this position by gravity, if the filter is arranged vertically as shown, or if arranged horizontally it may be retained in place by an external magnet 10 being placed against the casing towards the inlet end. Alternatively, external magnet 10 may be a piece of magnetic material to which the internal magnet 8 is attracted.

When the magnet 8 is in the position shown in solid line in Figure 2, water can flow through the inlet coupling 3 into an inlet chamber 11, defined between the inlet portion 2a of the housing 2 and the first filter element 6. The water then passes through the mesh 6a of the first filter element 6, as indicated by the arrows 13, before passing along the internal cavity 9 into the second filter element 7, through mesh 7a, into an outlet chamber 12 defined between the second filter element 7 and the outlet portion 2b of the housing 2, and out through outlet coupling 4.

Any particulate material not large enough to pass through the mesh 6a of the first filter element 6 will be trapped by the continued flow against the mesh 6a. Furthermore any magnetic material, such as particles of iron oxide will be trapped towards the lower portion "A" of the mesh 6a, due to the influence of the magnetic field of the magnet 8 drawing the particles to the mesh. This will leave the upper portion "B" of the mesh free of magnetic particles.

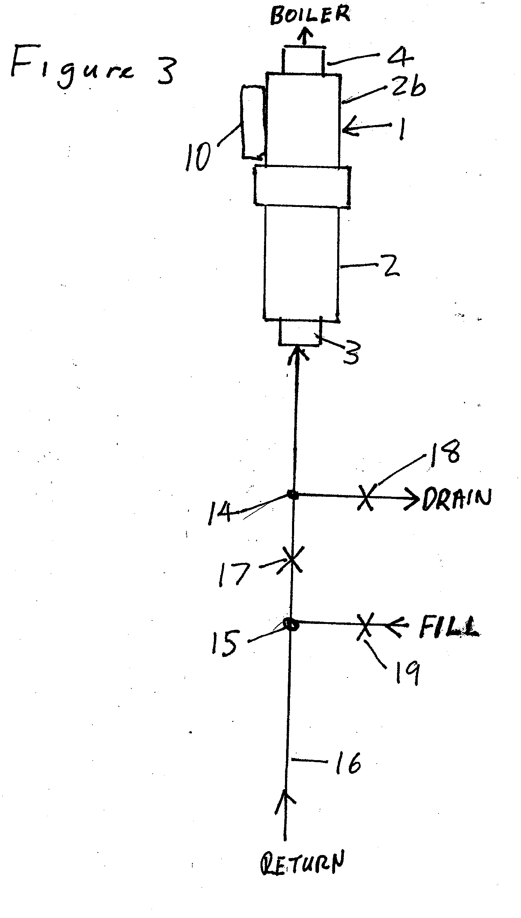

When it is desired to clean the filter, the filter may be reverse flushed as described below with reference to Figure 3. The external magnet 10 is used to first draw the magnet 8 into the second filter element 7, as represented by the broken line 8'. Here the magnetic field of the magnet will no longer act to retain magnetic particles on the first filter element 6. With the magnet in the position represented by broken line 8', the flow can be reversed such that fluid enters the outlet coupling 4 and exits the inlet coupling 3, flushing deposits off the outer surface of the first filter element 6.

Referring now to Figure 3, there is illustrated part of a central heating system in which the filter 1 of Figures 1 and 2 is installed. The outlet 4 of the filter is attached to the inlet of the boiler and the inlet 3 of the filter is attached to the flow return to the boiler. Two connections 14 and 15 can be made to the return pipe 16 with a valve 17 inserted between the two connections 14 and 15. Connection 14 is connected to the drain and connection 15 is a fill point. Typically the drain and fill will be connected to the inlet and outlet respectively of a purpose built flushing machine. The connections to the drain and the fill have respective valves 18 and 19 therein.

In normal operation of the central heating system, valve 17 will be open and valves 18 and 19 closed, thus the return passes through the filter 1 to the boiler. When it is desired to flush the system, valve 17 is closed and valves 18 and 19 are opened, with water, or a flushing agent, being forced into the connection 15 whereby it will flow in the reverse direction around the central heating system. With the internal magnet 8 of the filter 1 drawn to the position indicated by broken line 8' in Figure 1, the reverse flow will cause the first filter element 6 to be flushed and any deposits to be removed from the system to the drain.

One embodiment of the invention has been described above by way of example only and it will be appreciated that modifications thereto may be apparent to one skilled in the art, which modifications fall within the scope of the appended claims.

## Claims

1. A fluid filter comprising:
an outer water tight housing having a fluid inlet and a fluid outlet;
a filter element positioned in a fluid flow path between the fluid inlet and the fluid outlet; and
a magnet, wherein:
an inlet chamber is defined in the housing between the inlet and the filter element; the magnet is located downstream of the filter element and is moveable between a first position where the magnetic field of the magnet acts to retain any magnetic particles in the inlet chamber against the filter element and a second position where the magnetic field of the magnet does not act to retain any magnetic particles in the inlet chamber against the filter element.

2. A filter as claimed in Claim 1, wherein the magnet can be moved within the filter by an external magnet or piece of magnetic material placed adjacent to the outside of the housing.

3. A filter as claimed in Claim 1 or 2, wherein the housing and filter element are both tubular and the filter element is located coaxially within the housing.

4. A filter element as claimed in Claim 3, wherein the magnet is located in a first position within the tubular filter element but is shorter than the filter element so that magnetic particles are only retained in place over a portion of the filter element.

5. A filter as claimed in Claim 3 or 4, wherein:
the filter element is a first filter element and the filter further comprises a second filter element in the fluid flow path between the first filter element and the outlet;
an outlet chamber is defined between the second filter element and the outlet;
the housing is tubular;
the first and second filter elements are axially aligned within the housing so that the magnet may be moved axially along an inner chamber defined by the tubular filter elements from the first position within the first filter element to a second position in the second filter element; and
the housing seals with first and second filter elements where they join, the seal separating the inlet chamber from the outlet chamber.

6. A filter as claimed in any preceding claim, wherein the housing is tubular, having an inlet at one end and an outlet at the opposite end, and is releasably clamped or screwed together at portion between the inlet and outlet to permit the filter elements and magnet to be removed.

7. A filter element as claimed in any preceding claim, wherein the housing is transparent.

8. A central heating system comprising a filter as claimed in any preceding claim, wherein the filter is installed with its major axis extending vertically and with the inlet located at the bottom of the filter.

9. A method of flushing a central heating system comprising a filter as claimed in any preceding claim, the method comprising connecting the inlet of the filter to a drain point and the outlet of the filter to a flushing supply, moving the magnet to the second position, reverse flushing the filter and then moving the magnet back to the first position for continued service.
